# EUROPEAN PATENT APPLICATION

(11) **EP 2 202 610 A2**
(43) Date of publication of application: **30.06.2010**
(21) Application number: 09162026.0
(22) Date of filing: 05.06.2009
(51) Int. Cl.: G06F 3/01, G06F 1/16

(54) **Information processing apparatus**

(30) Priority: 25.12.2008 JP 2008330657
(71) Applicant: Kabushiki Kaisha Toshiba, Minato-ku Tokyo (JP)
(72) Inventor: Momono, Kazuyo, Tokyo (JP)
(74) Representative: HOFFMANN EITLE

(57) **Abstract**

An information processing apparatus, including: sensor; a motion pattern detector configured to detect a given motion pattern from a measurement result by the sensor; a controller configured to perform a control operation associated with the given motion pattern if the given motion pattern is detected by the motion pattern detector; and an application processor configured to perform an application operation including an application operation associated with the given motion pattern if the given motion pattern is detected by the motion pattern detector. The controller does not perform the control operation associated with the given motion pattern if the given motion pattern is detected during the application operation.

## Description

### CROSS-REFERENCE TO RELATED APPLICATIONS

The entire disclosure of Japanese Patent Application No.2008-330657 filed on December 25, 2008, including specification, claims, drawings and abstract is incorporated herein by reference in its entirety.

### BACKGROUND

### Field of the Invention

One aspect of the present invention relates to an information processing apparatus, and in particular, to a processing that depends on an acceleration applied to the apparatus.

### Description of the Related Art

In many cases, an operation instruction for a small portable information processing apparatus, such as a mobile communication apparatus or the like, is made by a key operation. Meanwhile, each key of the small apparatus is of a small size, and accordingly a user who is unfamiliar with operation may feel challenged to perform a key operation.

There is a method in which the user moves the apparatus to give an operation instruction to the apparatus. That is, the apparatus includes an acceleration sensor, and the acceleration sensor measures an acceleration applied to the apparatus so as to detect the pattern of a motion applied to the apparatus. A series of motion patterns are stored in association with each function of the apparatus one-to-one, and when the series of motionpatterns are detected, the function that is stored in association with the series of motion patterns is executed (for example, see JP-A-2008-176641 (pp. 11-13 and 20, and Fig. 6)).

However, in the method described in JP-A-2008-176641, a series of motion patterns and each function of the apparatus are associated with each other one-to-one, and accordingly a series of motion patterns have several motion patterns. As a result, the user needs to move the apparatus several times in order to execute one function. In addition, the user may not memorize a series of motion patterns associated with each function.

### SUMMARY

One of objects of the invention is toprovidean information processing apparatus that executes a given function based on a small number of motion patterns.

According to an aspect of the invention, there is provided an information processing apparatus including: a sensor; a motion pattern detector configured to detect a given motion pattern from a measurement result by the sensor; a controller configured to perform a control operation associated with the given motion pattern if the given motion pattern is detected by the motion pattern detector; and an application processor configured to perform an application operation including an application operation associated with the given motion pattern if the given motion pattern is detected by the motion pattern detector, wherein the controller does not perform the control operation associated with the given motion pattern if the given motion pattern is detected during the application operation.

### BRIEF DESCRIPTION OF THE DRAWINGS

Embodiment may be described in detail with reference to the accompanying drawings, in which:
Figs. 1A and 1B are exemplary exterior views of a sliding type mobile communication apparatus according to an embodiment of the invention in a state where upper and lower casings are open;
Figs. 2A and 2B are exemplary exterior views of a sliding type mobile communication apparatus according to an embodiment of the invention in a state where upper and lower casings are closed;
Fig. 3 is an exemplary block diagram showing the configuration of a mobile communication apparatus according to an embodiment of the invention;
Fig. 4 is a diagram showing an example of the configuration of motion pattern-system operation relationship according to an embodiment of the invention;
Fig. 5 is an exemplary diagram showing the overview of motion pattern according to an embodiment of the invention; and
Fig. 6 is a flowchart showing an example of an operation of a game processor to execute a game program according to an embodiment of the invention.

### DETAILED DESCRIPTION OF THE EMBODIMENTS

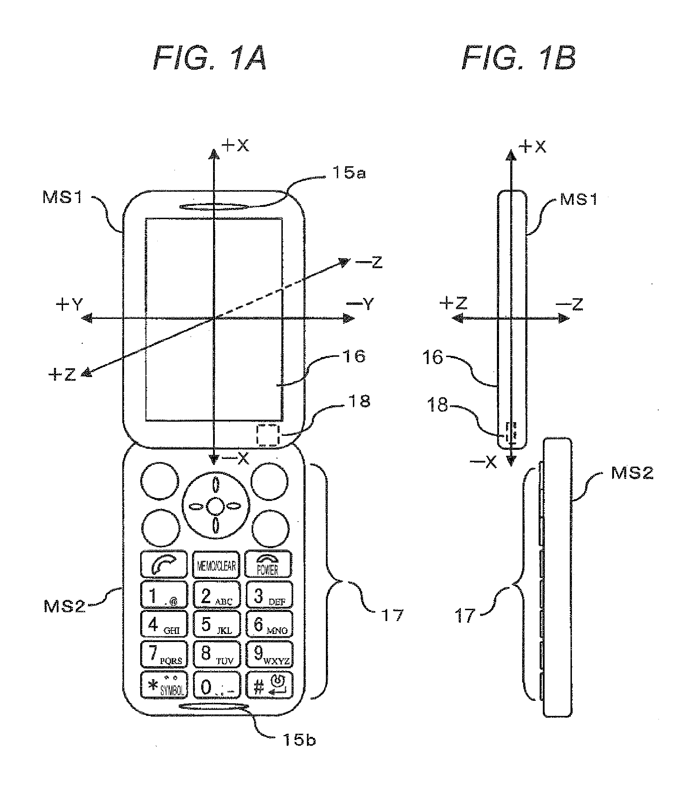

Hereinafter, an embodiment of an information processing apparatus according to the invention will be described with reference to the drawings. Figs. 1A and 1B are exterior views of a mobile communication apparatus, to which the information processing apparatus according to the embodiment of the invention is applied, in a state where upper and lower casings MS1 and MS2 are slid open. Fig. 1A is a front view, and Fig. 1B is a side view.

The mobile communication apparatus is configured such that the upper and lower casings MS1 and MS2 can be freely opened and closed as a result of the upper casing MS1 being caused to slide upward and downward on a slide portion (not shown). Figs. 1A and 1B are exterior views showing a case where the upper and lower casings MS1 and MS2 are opened as a result of the upper casing MS1 being caused to slide upward. At a front of the upper casing MS1, that is, at a face opposite to the lower casing MS2, provided are a speaker 15a and a display 16. The speaker 15a is used for receiving incoming voice. The display 16 is used for displaying an indication that prompts a user to conduct an operation, an indication of an operation conducted by the user, a cursor position, an operating state of the apparatus, and the like. The display 16 is configured by a backlight-equipped Liquid Crystal Display (LCD). Inside the upper casing MS1, an acceleration sensor 18 is provided.

At a front of the lower casing MS2, that is, at a face on the upper casing MS1 side, provided are an input section 17 and a microphone 15b. The input section 17 is configured by a keypad. The microphone 15b is used for sending outgoing voice. The lower casing MS2 includes an antenna (not shown) that is used for sending and receiving electric waves. In a state where the upper and lower casings MS1 and MS2 are open, all the keys of the input section 17 appear so as to be operable.

The input section 17 includes numeral keys, which are used to input alphanumeric characters, characters, symbols, and the like, and a plurality of function keys, which are used to input an operation instruction, such as turning on and off power to the mobile communication apparatus, and the like.

For description of a pattern of a motion of the casing, in which the display 16 is provided, that is, the upper casing MS1, three axes, which are perpendicular to each other at the center of the upper casing MS1, are defined. As shown in the drawing, the three axes include an X axis in an up-down direction (the upper side is positive), a Y axis in a left-right direction (the left side is positive), and a Z axis in a front-back direction (the near side is positive).

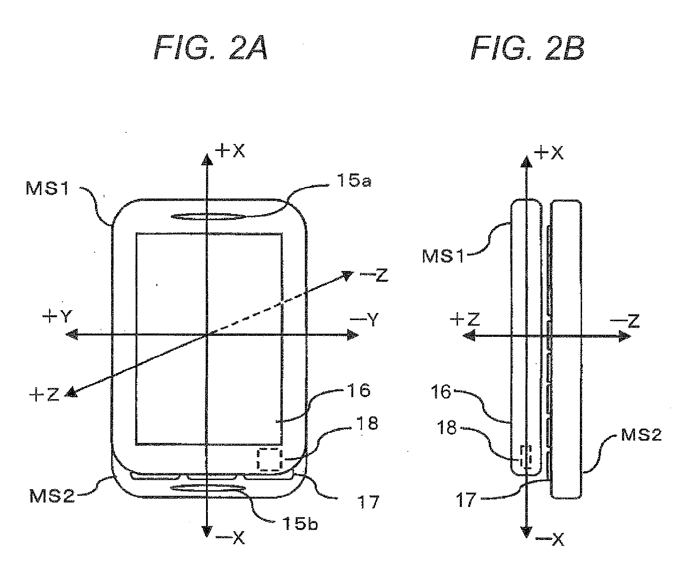

Figs. 2A and 2B are exterior views of the mobile communication apparatus in a state where the upper and lower casings MS1 and MS2 are closed. Fig. 2A is a front view, and Fig. 2B is a side view. As a result of slide being closed, that is, as a result of the upper casing MS1 being caused to slide downward, the input section 17 provided at the front face of the lower casing MS2 is hidden, and the upper and lower casings MS1 and MS2 are closed. Three axes that are perpendicular to each other at the center of the upper casing MS1 are the same as the three axes in the open state.

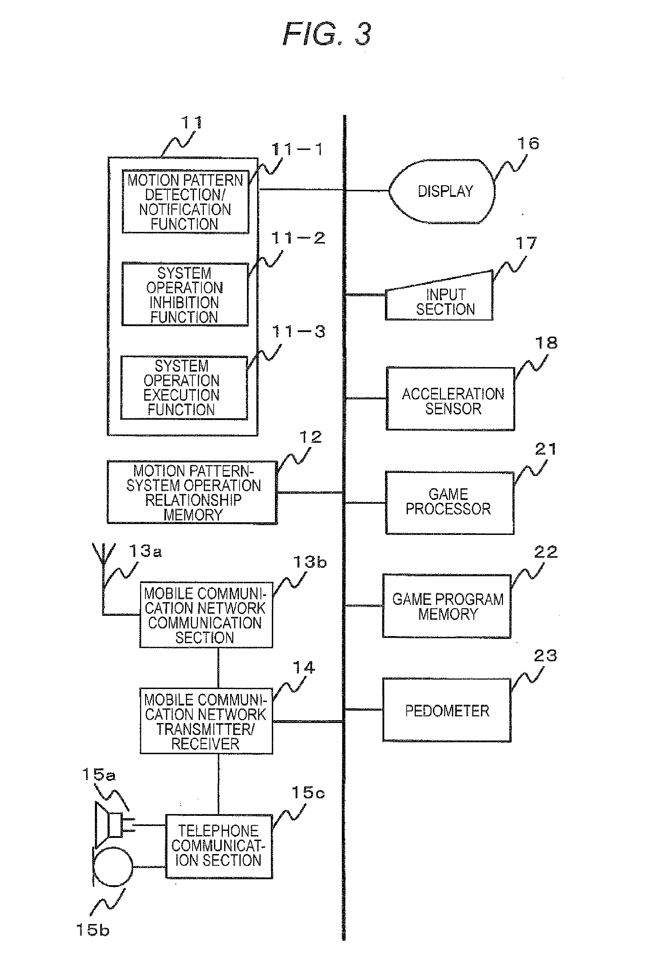

Fig. 3 is a block diagram showing the configuration of the mobile communication apparatus. The mobile communication apparatus includes a controller 11 that controls the entire apparatus, a motion pattern-system operation relationship memory 12, an antenna 13a that sends and receives electric waves with a base station (not shown) belonging to a mobile communication network, a mobile communication network communication section 13b, a mobile communication network transmitter/receiver 14, a speaker 15a that is used for receiving incoming voice, a microphone 15b that is used for sending outgoingvoice, a telephone communication section 15c, a display 16 that presents information to the user, an input section 17 that is used to input an operation instruction from the user, an acceleration sensor 18 that measures accelerations in the three X, Y, and Z-axis directions, a game processor 21, a game program memory 22, and a pedometer 23.

The motion pattern-system operation relationship memory 12 stores the motion pattern-system operation relationship. The game programmemory 22 stores game programs that are executed by the game processor 21.

As the functions of the invention that are realized by execution of programs, the controller 11 has a motion pattern detection/notification function 11-1, a system operation inhibition function 11-2, and a system operation execution function 11-3.

The operation of each section of the mobile communication apparatus according to the embodiment of the invention configured as above will be described with reference to Figs. 1A to 3.

The motion pattern detection/notification function 11-1 inputs the accelerations in the three X, Y, and Z-axis directions perpendicular to each other measured by the acceleration sensor 18, and while the pedometer 23 is operating, sends the accelerations to the pedometer 23 through an Application Programming Interface (API).

The motion pattern detection/notification function 11-1 detects whether or not the accelerations in the three axis directions perpendicular to each other measured by the acceleration sensor 18 represent a given motion pattern (gesture). If detected, the detected motion pattern is sent to the system operation execution function 11-3. After a request to transmit a motion pattern is made from the game processor 21 through the API, the motion pattern is also sent to the game processor 21 through the API. After a request to stop motion pattern transmission is made from the game processor 21 through the API, the motion pattern is not sent to the game processor 21.

After a request to inhibit a system operation is made from the game processor 21 through the API, the system operation inhibition function 11-2 inhibits the operation of the system operation execution function 11-3 based on the motion pattern sent from the motion pattern detection/notification function 11-1. After a request to release system operation inhibition is made from the game processor 21 through the API, the system operation inhibition function 11-2 does not inhibit the operation of the system operation execution function 11-3.

Due to the motion pattern sent from the motion pattern detection/notification function 11-1, the system operation execution function 11-3 performs a system operation stored in the motion pattern-system operation relationship memory 12 in association with the motion pattern. For example, the system operation includes rotation of an indication to be displayed on the display 16, stop display of all or a part of an indication to be displayed on the display 16, and activation of a task management function of the controller 11 according to a key operation through the input section 17.

The system operation does not depend on an operation of an application processing section (game processor 21 and pedometer 23) . The system operation execution function 11-3 also performs the system operation due to a given key operation through the input section 17. For this reason, with respect to the system operation, the motion pattern is not necessarily sent from the motion pattern detection/notification function 11-1.

The mobile communication network communication section 13b transmits a high-frequency signal, which is received through the antenna 13a, to the mobile communication network transmitter/receiver 14. The mobile communication network communication section 13b also transmits the high-frequency signal, which is transmitted from the mobile communication network transmitter/receiver 14, through the antenna 13a.

The mobile communication network transmitter/receiver 14 amplifies, frequency-converts, and demodulates the high-frequency signal transmitted from the mobile communication network communication section 13b, transmits a demodulated digital sound signal to the telephone communication section 15c, and transmits a control signal to the controller 11. The mobile communication network transmitter/receiver 14 modulates, frequency-converts, and amplifies a digital sound signal transmitted from the telephone communication section 15c and a control signal transmitted from the controller 11, and transmits an amplified high-frequency signal to the mobile communication network communication section 13b.

The telephone communication section 15c converts the digital sound signal transmitted from the mobile communication network transmitter/receiver 14 into an analog sound signal, amplifies the analog sound signal, and sends the amplified analog sound signal to the speaker 15a. The telephone communication section 15c amplifies an analog sound signal which is output from the microphone 15b, converts the amplified analog sound signal into a digital sound signal, and transmits the digital sound signal to the mobile communication network transmitter/receiver 14.

The display 16 performs a display operation for characters, numerals, or image data under the control of the controller 11. Data being displayed is switched depending on an operation of the game processor 21 or in response to an input signal from the input section 17.

The input section 17 has a plurality of key switches, and when a key of the input section 17 is operated, the controller 11 is notified of a key identifier, and characters are displayed on the display 16 by the controller 11. In addition, control is performed by each section of the mobile communication apparatus.

The game processor 21 is activated based on a given key operation through the input section 17, and executes a program, which is selected based on a given key operation through the input section 17, from among the game programs stored in the game program memory 22. As part of the operation of the program, the game processor 21 requests the motion pattern detection/notification function 11-1 to transmit a motion pattern, and executes the program depending on a motion pattern transmitted from the motion pattern detection/notification function 11-1.

If a motion pattern is sent, the operation of the game processor 21 follows data in a game program being executed or the relationship of motion patterns and application operations stored as a part of the program. In addition to the request to transmit a motion pattern, the game processor 21 requests the system operation inhibition function 11-2 to inhibit a system operation.

When a program relating to the request to transmit a motion pattern ends, as part of the operation of the program or independently from the program, the game processor 21 requests the motion pattern detection/notification function 11-1 to stop motion pattern transmission. In addition, the game processor 21 requests the system operation inhibition function 11-2 to release system operation inhibition.

The pedometer 23 starts to operate based on a given key operation through the input section 17, sums second powers of the accelerations in the three axis directions measured by the acceleration sensor 18, and finds the square root of the sum to calculate a motion acceleration of the apparatus. The calculated acceleration is sampled with a given sampling frequency, and each time it is determined that a spectrum, which shows the frequency distribution of a change in the acceleration and intensity of each frequency component, is a spectrum due to walking, the number of walking steps stored in the pedometer 23 is incremented.

The pedometer 23 displays the number of walking steps stored in the pedometer 23 on the display 16 based on a given key operation through the input sect ion 17, and resets the stored number of walking steps to 0. The pedometer 23 does not request the systemoperation inhibition function 11-2 to inhibit a system operation. For this reason, the operation of the pedometer 23 has no influence on the system operation by the system operation execution function 11-3.

The motion pattern-system operation relationship that is stored in the motion pattern-system operation relationship memory 12 will now be described in conjunction with motion patterns that are detected by the motion pattern detection/notification function 11-1.

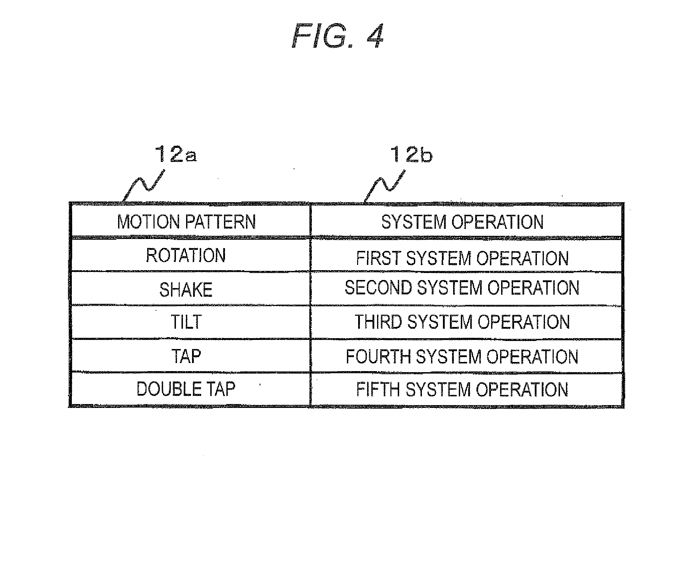

Fig. 4 shows an example of the configuration of the motion pattern-system operation relationship, which includes information on a motion pattern 12a and a system operation 12b in association with each other. The motion pattern 12a is a motion pattern of the mobile communication apparatus to be detected by the motion pattern detection/notification function 11-1, and is information for identifying one of "rotation", "shake", "tilt", "tap", and "double tap".

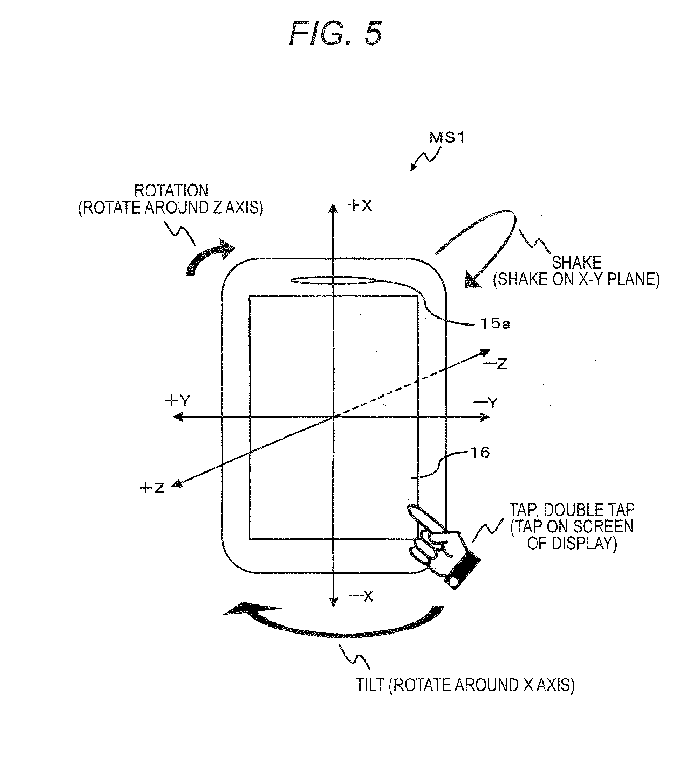

The motion pattern will be described with reference to Fig. 5. The "rotation" is a motion of rotation around the Z axis, that is, a motion of rotation on an X-Y plane. When the "rotation" is detected, the motion pattern detection/notification function 11-1 detects a rotation direction and a rotation angle, and puts the detected rotation direction and rotation angle in the motion pattern. The rotation angle may be, for example, in a unit of 90 degrees or 45 degrees.

The "shake" is a motion of shake on the X-Y plane, that is, a motion of reciprocation. The "tilt" is a motion of tilt around the X axis, that is, a motion of rotation of a Y-Z plane at a small rotation angle. When the "tilt" is detected, the motion pattern detection/notification function 11-1 detects a tilt direction (identical to a rotation direction), and puts the detected tilt direction in the motion pattern.

The "tap" is a motion to make an impact, for example, a tap motion on the screen of the display 16 provided in the upper casing MS1 with a fingertip or the like. The "double tap" is a motion when the motion to make an impact is made two times within a threshold time interval.

The system operation 12b is information for identifying a given system operation, which is performed by the system operation execution function 11-3, without depending on the application processing section. For example, the system operation is information for identifying rotation of an indication to be displayed on the display 16 or stop display of all or a part of an indication to be displayed on the display 16.

In the mobile communication apparatus according to the embodiment of the invention configured as above, when a game program is executed, an example of an operation of the game processor 21 to inhibit an operation of the system operation execution function 11-3 based on a motion pattern and to release inhibition will be described.

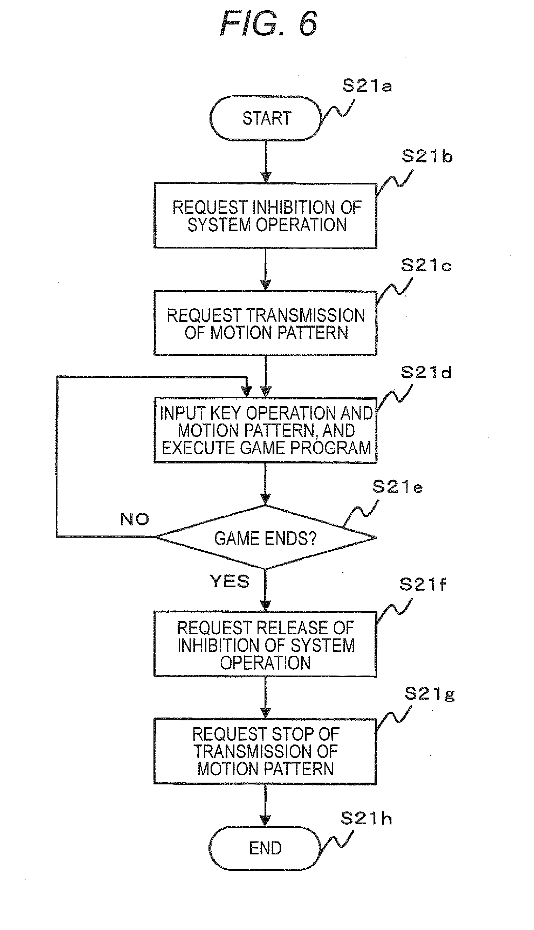

Fig. 6 is a flowchart of an example of an operation of the game processor 21 to inhibit an operation of the system operation execution function 11-3 based on a motion pattern and to release inhibition when a game program is executed. Whether to inhibit an operation of the system operation execution function 11-3 and to release inhibition or not depends on a game program that is executed. A game program that operates in accordance with an instruction based on a key operation through the input section 17 does not include the programs for the operations of inhibition and inhibition release, and as a result, the game processor 21 dose not generally perform the operations of inhibition and inhibition release.

The game processor 21 starts to execute a game program (Step S21a), requests the system operation inhibition function 11-2 to inhibit a system operation (Step S21b), and requests the motion pattern detection/notification function 11-1 to transmit a motion pattern (Step S21c). Next, a key operation through the input section 17, and a motion pattern transmitted from the motion pattern detection/notification function 11-1 are input, and the game program is executed in accordance with the input key operation and motion pattern (Step S21d).

The game processor 21 determines whether or not the key operation or the motion pattern indicates to end the execution of the game program (Step S21e). When it is determined that the key operation or the motion pattern does not indicate the end of the execution of the game program, the process progresses to the input in Step S21d and the execution of the game program according to the input. When it is determined that the key operation or the motion pattern indicates the end of the execution of the game program, the game processor 21 requests the system operation inhibition function 11-2 to release system operation inhibition (Step S21f), and requests the motion pattern detection/notification function 11-1 to stop motion pattern transmission (Step S21g) so as to end the execution of the game program (Step S21h).

With the above-described operation, even if the same motion pattern is detected by the motion pattern detection/notification function 11-1, the mobile communication apparatus performs different operations in accordance with whether or not the game processor 21 is executing a given game program. That is, a plurality of instructions suited to the situation can be made to the mobile communication apparatus by a single motion pattern.

When an incoming signal is received and the execution of the game program is interrupted, the game processor 21 performs the operation of the request to release system operation inhibition in Step S21f and the request to stop motion pattern transmission in Step S21g. When the execution of the interrupted game program restarts, the game processor 21 performs the operation of the request to inhibit a system operation in Step S21b and the request to transmit a motion pattern in Step S21c. To this end, while the operation of the game processor 21 is being interrupted, the system operation execution function 11-3 performs a given system operation based on a motion pattern.

In the above description, the game processor 21 performs the operation of the request to inhibit a system operation in Step S21b, the operation of the request to transmit a motion pattern in Step S21c, the operation of the request to release system operation inhibition in Step S21f, and the operation of the request to stop motion pattern transmission in Step S21g depending on a game program to be executed. However, the embodiment is not limited thereto.

For example, whether to perform an operation based on a motion pattern or not may be stored in the game program memory 22 as an attribute of the game program. In this case, with respect to the start, end, interrupt, and restart of the execution of the game program, the game processor 21 or the task management function of the controller 11 may make the request to inhibit a system operation, the request to transmit a motion pattern, the request to release system operation inhibition, and the request to stop motion pattern transmission with reference to the attribute.

In the above description, the system operation inhibition function 11-2 inhibits the operation of the system operation execution function 11-3, and at the time of inhibition release, inhibits the operations based on all the motion patterns or releases inhibition. However, the embodiment is not limited thereto. A motion pattern 12a may be specified and inhibited and/or released. In this case, when a game being executed operates based on some motion patterns 12a, the game processor 21 may inhibit operations of the system operation execution function 11-3 based on some motion patterns 12a or release inhibition.

In the above description, the motion patterns of the mobile communication apparatus that are detected by the motion pattern detection/notification function 11-1 are five kinds of "rotation", "shake", "tilt", "tap", and "double tap". These motion patterns are selected as many as possible insofar as a user who moves a small apparatus with his/her one hand can easily conduct such motions with his/her one hand, and the motion pattern detection/notification function 11-1 can detect such motions with a small detection error. A complex motion and a plurality of successive motions may cause an erroneous operation due to a lapse of memory of the user, and may cause a detection error. In addition, the user may feel troublesome in using the apparatus. Therefore, a complex motion and a plurality of successive motions are undesirable.

In the above description, the acceleration sensor 18 is provided inside the upper casing MS1. This is because, when a game is executed, in many cases, the user holds the apparatus in a state where the upper and lower casings MS1 and MS2 are closed, or the user holds the upper casing MS1, in which the display 16 is provided, moves the apparatus to give an instruction to the game processor 21, and views the execution result of the game by the game processor 21 on the display 16. In this situation, if the acceleration sensor 18 is provided inside the upper casing MS1, in which the display 16 is provided, the detection error of the motion pattern can be reduced.

However, the embodiment is not limited thereto. In many cases, when the game processor 21 runs a game that mainly operates in accordance with a key operation through the input section 17, the user holds the lower casing MS2, in which the input section 17 is provided. For this reason, in order to reduce the detection error of the motion pattern, the acceleration sensor 18 is preferably provided inside the lower casing MS2, in which the input section 17 is provided. The acceleration sensor 18 may be provided in a remote control device (not shown) that is connected to the casing of the apparatus through a cable or a near field radio communication line. In this case, the user holds the remote control device, and thus the detection error of the motion pattern can be reduced.

In the above description, immediately after the execution of the game program starts and immediately before the execution of the game program ends, the game processor 21 causes the system operation inhibition function 11-2 to inhibit a systemoperation and causes the motion pattern detection/notification function 11-1 to transmit a motion pattern. However, the embodiment is not limited thereto. In a specific stage where a motion depending on a motion pattern is conducted, a system operation may be inhibited and a motion pattern may be transmitted.

In the above description, the game processor 21 does not conduct a motion depending on a motion pattern transmitted from the motion pattern detection/notification function 11-1, and is described as an example of an application processing section, which requests the system operation inhibition function 11-2 to inhibit a system operation. Meanwhile, the pedometer 23 does not conduct a motion depending on the motion pattern, and is described as an example of an application processing section, which does not request inhibition of the system operation. In other application processing sections, a request to inhibit a system operation may be made or not depending on whether or not a motion depending on a motion pattern is conducted, and as a result, the apparatus performs an appropriate operation.

In the above description, the motion pattern detection/notification function 11-1 detects a given motion pattern from the acceleration measured by the acceleration sensor 18, but the embodiment is not limited thereto. Instead of or in addition to the acceleration sensor 18, a geomagnetic sensor (not shown), an illuminance sensor (not show), a touch sensor (not shown), or a pressure sensor (not shown) may be used, and a motion pattern may be detected based on the measurement result of the sensor.

The motion patterns "rotation", "shake", and "tilt" may be detected based on the geomagnet ism measured by the geomagnetic sensor. The motion patterns "tap" and "double tap" may be detected based on the positional relationship between the position of a finger measured by the illuminance sensor, the touch sensor, or the pressure sensor, and the sensor. These sensors may be molded as a single body with or separately from the display screen of the display 16.

In the above description, an example where the invention is applied to the mobile communication apparatus, in which the upper and lower casings MS1 and MS2 can be freely opened and closed by the sliding, has been described. However, the invention may also be applied to other mobile communication apparatuses, for example, a mobile communication apparatus, in which the upper and lower casings MS1 and MS2 can rotate through a hinge so as to be freely opened and closed, or a mobile communication apparatus that includes a single casing. The invention may also be applied to portable apparatuses, for example, a PDA, a portable personal computer, and the like, other than the mobile communication apparatus. The invention is not limited to the above-described configuration, and various modifications may be made.

## Claims

1. An information processing apparatus comprising:
a sensor;
a motion pattern detector configured to detect a given motion pattern from a measurement result by the sensor;
a controller configured to perform a control operation associated with the given motion pattern if the given motion pattern is detected by the motion pattern detector; and
an application processor configured to perform an application operation including an application operation associated with the given motion pattern if the given motion pattern is detected by the motion pattern detector,
wherein the controller does not perform the control operation associated with the given motion pattern if the given motion pattern is detected during the application operation.

2. The information processing apparatus of Claim 1, wherein:
the sensor includes an acceleration sensor; and
the motion pattern detector detects the given motion pattern from an acceleration measured by the acceleration sensor.

3. The information processing apparatus of Claim 1, wherein:
the sensor includes an acceleration sensor;
the motion pattern detector detects the given motion pattern from an acceleration measured by the acceleration sensor; and
the application processor controls the controller to inhibit the control operation associated with the given motion pattern.

4. The information processing apparatus of Claim 1, wherein:
the sensor includes an acceleration sensor;
the motion pattern detector detects the given motion pattern from an acceleration measured by the acceleration sensor; and
the application processor controls the controller to inhibit the control operation associated with the given motion pattern after start of the application operation, and terminates the operation after the application processor controls the controller to release inhibition of the control operation associated with the given motion pattern.

5. The information processing apparatus of Claim 3,
wherein the application processor inhibits the control operation and releases the inhibition of the control operation through an Application Programming Interface (API).

6. The information processing apparatus of Claim 1,
wherein the given motion pattern includes one of rotation, reciprocation, tilt, and impact.

7. The information processing apparatus of Claim 2,
wherein the given motion pattern includes one of rotation, reciprocation, tilt, and impact.

8. The information processing apparatus of Claim 3,
wherein the given motion pattern includes one of rotation, reciprocation, tilt, and impact.

9. The information processing apparatus of Claim 4,
wherein the given motion pattern includes one of rotation, reciprocation, tilt, and impact.

10. The information processing apparatus of Claim 1,
wherein the application processor receives the given motion pattern detected by the motion pattern detector through an Application Programming Interface (API).

11. The information processing apparatus of Claim 2,
wherein the application processor receives the given motion pattern detected by the motion pattern detector through an Application Programming Interface (API).

12. The information processing apparatus of Claim 3,
wherein the application processor receives the given motion pattern detected by the motion pattern detector through an Application Programming Interface (API).

13. The information processing apparatus of Claim 4,
wherein the application processor receives the given motion pattern detected by the motion pattern detector through an Application Programming Interface (API).
